# EUROPEAN PATENT SPECIFICATION

(11) **EP 3 842 595 B1**
(45) Date of publication and mention of the grant of the patent: **17.05.2023**
(21) Application number: 20158566.8
(22) Date of filing: 20.02.2020
(51) Int. Cl.: E03C 1/02, F16K 1/00, F16L 11/20, F16L 39/02

(54) **HOSE STRUCTURE WITH ADJUSTABLE OUTLET WATER TEMPERATURE**
SCHLAUCHSTRUKTUR MIT EINSTELLBARER WASSERAUSTRITTSTEMPERATUR
STRUCTURE DE TUYAU À TEMPÉRATURE D'EAU DE SORTIE RÉGLABLE

(30) Priority: 26.12.2019 CN 201922387029 U
(43) Date of publication of application: 30.06.2021
(73) Proprietor: Fujian Xihe Sanitary Ware Technology Co., Ltd., QuanZhou, Fujian 362304 (CN)
(72) Inventor: LIN, Xiaofa, QuanZhou, Fujian (CN); LIN, Xiaoshan, QuanZhou, Fujian (CN); DU, Haibo, QuanZhou, Fujian (CN); DENG, Xiaoqing, QuanZhou, Fujian (CN)
(74) Representative: Murgitroyd & Company

(56) References cited:
- WO-A1-2006/120443
- DE-A1- 2 249 449
- DE-A1-102016 104 477
- GB-A- 2 050 157

## Description

### Technical Field

The application relates to the field of sanitary ware, more particularly to a hose structure with adjustable outlet water temperature.

### Background

Hose structure and water outlet device such as showerhead, are common products in the bathroom. The hose structure can be connected with a water supply mechanism and a water outlet device so as to supply cold and hot water to the water outlet device.

At present, most of the hose structures on the market have a single-channel, which cannot adjust the flow rate of cold and hot water and control the flow rate of cold and hot water entering the water outlet device, such as a showerhead. Such a water outlet device, such as a showerhead, thus does not have the function of temperature adjustment.

Related technologies are known from WO2006120443A1, DE102016104477A1 and GB2050157A.

Of these, DE102016104477A1 shows a double channel hose structure which does not allow for adjusting the outlet water temperature by means of itself. This document discloses the features of the preamble of claim 1.

### Summary

The present application provides a hose structure with adjustable water outlet temperature according to appended independent claim. Further improvements and embodiments are provided in the dependent claims.

An example of the application also discloses a hose structure with adjustable water outlet temperature, which includes a hose body and a water outlet joint assembly arranged at one end of the hose body and configured for connecting a water outlet device. The hose body is provided with through cold and hot water channels. The annular hot water channel surrounds the cold water channel.

A temperature adjusting mechanism is provided in the water outlet joint assembly and configured for adjusting the flow rate of hot water flowing out of the hose structure.

The hose body includes an outer hose and an inner hose sleeved in the outer hose. The cold water channel is formed in the inner hose, and a gap between the outer hose and the inner hose forms the hot water channel.

The water outlet joint assembly includes a water outlet joint and a water outlet horn-shaped joint which are connected to each other. The water outlet joint is connected with the inner hose and the outer hose. The water outlet joint is provided with a cold water through hole and a hot water through hole which are respectively matched with the cold water channel and the hot water channel to allow cold water and hot water to pass through. The hot water through hole is provided with partition ribs at the water outlet end thereof to form a plurality of spaced water outlets. The water outlet horn-shaped joint is sleeved outside the water outlet joint. The temperature adjusting mechanism is arranged in the water outlet horn-shaped joint and positioned at the side of the water outlet joint facing away from the hose body.

As a possible design, the water outlet joint includes a water inlet part and a water outlet part which are connected to each other. The water inlet part is provided with an inner connecting pipe and an outer connecting pipe sleeved outside the inner connecting pipe. The water outlet part is provided with an installation groove on the side thereof facing away from the water inlet part, and one end of the temperature adjusting mechanism is inserted into the installation groove.

As a possible design, the temperature adjusting mechanism includes a temperature adjusting head and a temperature adjusting knob. The temperature adjusting head is rotatably installed in the water outlet horn-shaped joint. The temperature adjusting head is provided with a central hole communicated with the cold water through hole, and one or more outer holes with arc-shaped cross sections. The outer holes are arranged outside the central hole and match with the hot water through hole. The temperature adjusting knob is arranged on the outer periphery of the temperature adjusting head and one end of the temperature adjusting knob extends out of the water outlet horn-shaped joint.

As a possible design, the temperature adjusting knob includes an arc-shaped plate and a tab. The arc-shaped plate is sandwiched between the water outlet joint and the water outlet horn-shaped j oint, and the tab extends out of the water outlet horn-shaped joint.

As a possible design, an installation hole is provided in the side wall of the water outlet horn-shaped joint. The tab extends out of the water outlet horn-shaped joint through the installation hole. The installation hole is configured as an elongated hole arranged along the circumferential direction of the water outlet horn-shaped joint, and the tab is slidable along the length direction of the installation hole.

As a possible design, seals are provided between the temperature adjusting head and the water outlet joint and on the side of the temperature adjusting head facing away from the water outlet joint.

As a possible design, the hose body is provided with a water inlet joint assembly at the other end. The water inlet joint assembly includes a water inlet joint and a water inlet horn-shaped joint which are connected to each other. The water inlet joint is connected with the inner hose and the outer hose, and the water inlet horn-shaped joint is sleeved outside the water inlet joint.

As a possible design, fastening rings are sleeved at both ends of the outer hose.

According to the hose structure with adjustable outlet water temperature of the example of the application, both cold and hot water channels discharge water. A temperature adjusting mechanism for adjusting the flow rate of cold and hot water is arranged to realize the adjustment of the flow rate of hot water, thereby adjusting the temperature of the outlet water by controlling the flow rate of hot water and thus achieving the purpose of temperature adjustment.

Other features and advantages of the application will be set forth in the following description, and will become apparent in part from the description, or be understood through the implementation of the application. The purpose and other advantages of the application can be realized and obtained through the structures specially described in the specification and the drawings.

### Brief Description of Drawings

The accompany drawings are used to provide a further understanding of the technical schemes of the application, which constitute a part of the specification, and together with the examples of the application, are used to explain the technical schemes of the application and do not constitute a limitation on the technical schemes of the application.
FIG. 1 is a schematic view of a hose structure according to an example of the present application;
FIG. 2 is a schematic exploded view of a hose structure according to an example of the present application.
FIG. 3 is a cross-sectional view taken along line B-B of FIG. 1;
FIG. 4 is a partially enlarged schematic view at portion A in FIG. 3;
FIG. 5 is a cross-sectional view taken along line C-C of FIG. 3;
FIG. 6 is a cross-sectional view taken along line D-D of FIG. 3;
FIG. 7 is a cross-sectional view taken along line E-E of FIG. 3;
FIG. 8 is a cross-sectional view taken along line F-F of FIG. 3;
FIG. 9 is a schematic exploded view of the temperature adjusting mechanism in FIG. 2;
FIG. 10 is a first schematic view of the water outlet joint in FIG. 2; and
FIG. 11 is a second schematic view of the water outlet joint in FIG. 2.

Reference numbers: 1- hose body, 2- water outlet joint assembly, 3- water inlet joint assembly, 4- outer hose, 5- inner hose, 6- fastening ring, 7- water outlet horn-shaped joint, 8-water outlet joint, 9- temperature adjusting knob, 10- first seal, 11- temperature adjusting head, 12- second seal, 13- water inlet horn-shaped joint, 14- water inlet joint, 15- gasket, 16-installation hole, 17- internal thread, 18- cold water channel, 19- hot water channel, 20- water outlet part, 22- cold water through hole, 23- hot water through hole, 24- partition rib, 25- inner connecting pipe, 26- outer connecting pipe, 27- arc-shaped plate, 28- tab, 29- receiving groove, 30- center hole, 31- outer hole, 32- fixing rib, 33- clearance groove, 34- installation groove, 35-restricting rib, 36- extension, 37- notch, 38- fitting rib, 39- water outlet.

### Detailed Description

In order to make the purposes, technical schemes and advantages of the application clearer, the examples of the application will be described in detail below with reference to the accompany drawings. It should be noted that the examples of this application and the features of the examples can be combined with each other in any way unless there is a confliction.

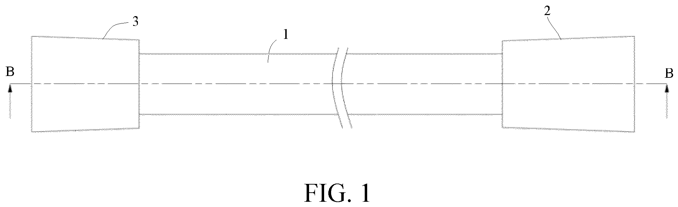

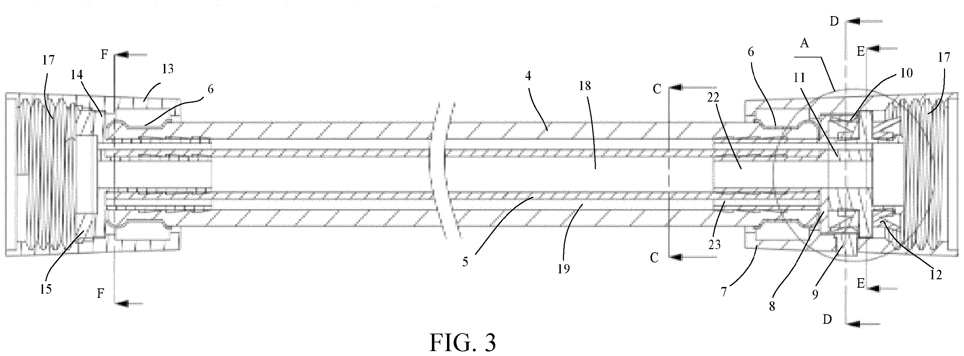

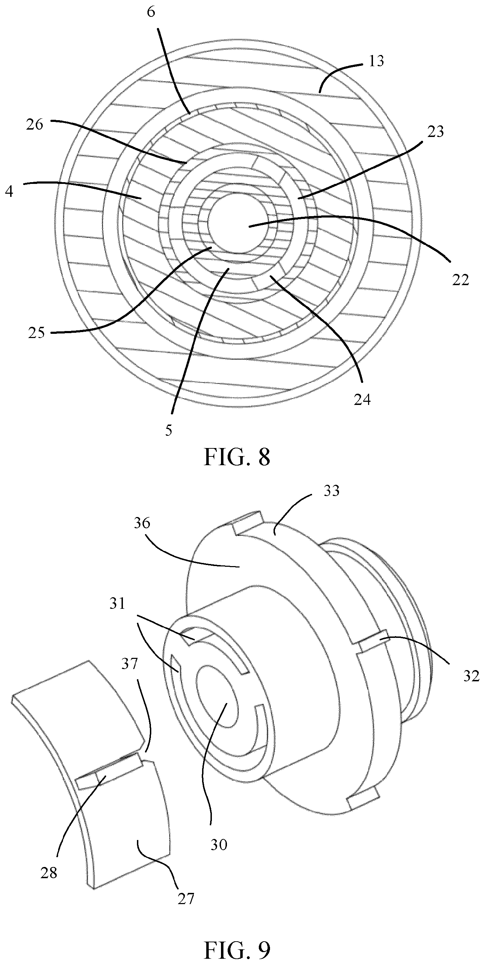

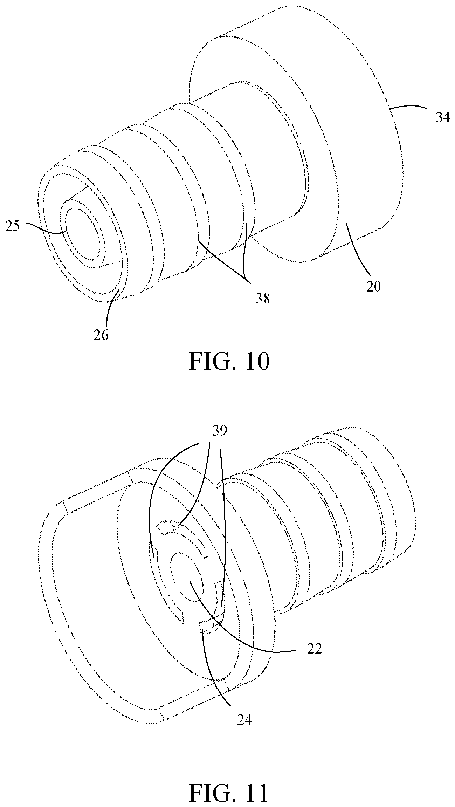

Reference is made to the hose structure of this application shown in FIGs. 1 to 11. As shown in FIGs. 1 to 3, the hose structure includes a hose body 1, a water outlet joint assembly 2 and a water inlet joint assembly 3. The water outlet joint assembly 2 and the water inlet joint assembly 3 are arranged respectively at the two ends of the hose body 1 for connecting a water outlet device and a water supply device. In particular, the hose body 1 is internally provided with a through cold water channel 18 and a through hot water channel 19 which is annular and arranged around the cold water channel 18. Additionally, a temperature adjusting mechanism is arranged in the water outlet joint assembly 2, which can adjust the flow rate of hot water flowing out of the hose structure. As a result, the hose structure discharges water from both of the cold water channel 18 and the hot water channel 19, furthermore, the hot water flow rate is adjusted by the temperature adjusting mechanism and the cold water flows out at a constant flow rate. As a result, the temperature of the outlet water may be adjusted by controlling the hot water flow rate, and thus the temperature adjustment is achieved.

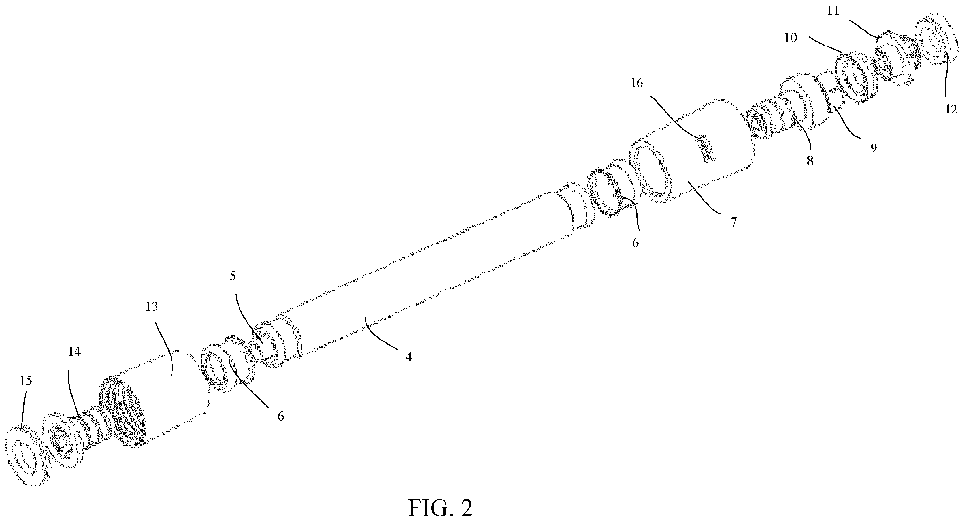

Specifically, as shown in FIGs. 2, 3, and 5, the hose body 1 includes an outer hose 4 and an inner hose 5 sleeved inside the outer hose 4. The outer hose 4 and the inner hose 5 have the same length. The inner hose 5 has a smaller diameter than the outer hose 4, thereby the cold water channel 18 is formed in the inner hose 5, and the hot water channel 19 is formed by the gap between the inner wall of the outer hose 4 and the outer wall of the inner hose 5.

As shown in FIGs. 2 to 4, the water outlet joint assembly 2 includes a water outlet joint 8 and a water outlet horn-shaped joint 7 which are connected to each other. The water outlet horn-shaped joint 7 is sleeved outside the water outlet joint 8. A temperature adjusting mechanism including a temperature adjusting head 11 and a temperature adjusting knob 9 is arranged in the water outlet horn-shaped joint 7 and is positioned on the side of the water outlet joint 8 facing away from the hose body 1.

As shown in FIGs. 2 to 4, the water outlet horn-shaped joint 7 has the shape of a horn, and is provided with an internal thread 17 on the inner side of the end having a larger opening, so as to connect to the water outlet device. After connecting the water outlet device, the water outlet device can be positioned against the temperature adjusting head 11 in the water outlet horn-shaped joint 7 so as to prevent the axial movement of the temperature adjusting head 11.

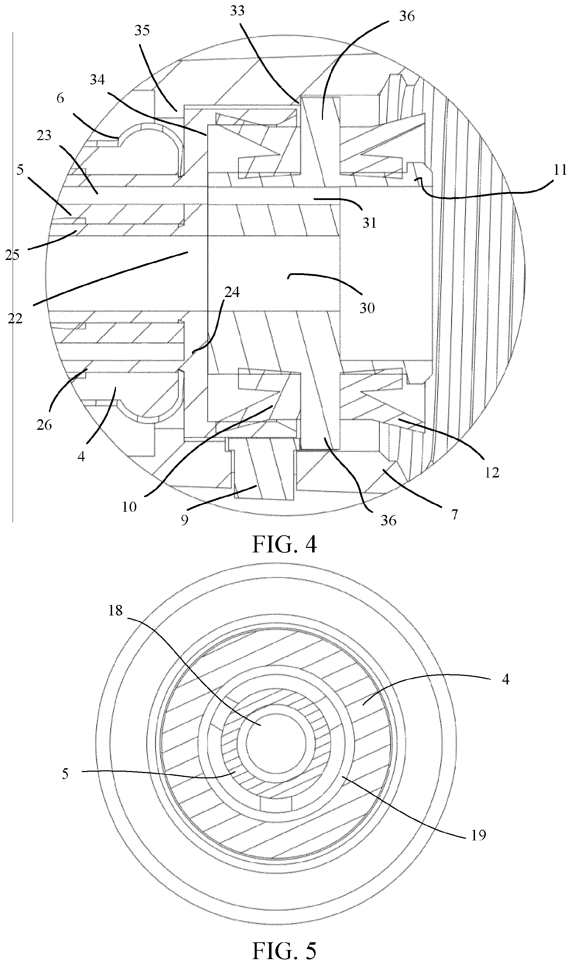

As shown in FIGs. 2 to 4, 10 and 11, the water outlet joint 8 includes a water inlet part and a water outlet part which are connected to each other. The water inlet part is connected with the hose body 1, and the water outlet part cooperates with the temperature adjusting mechanism. The water inlet part includes an inner connecting pipe 25 and an outer connecting pipe 26 which is sleeved outside the inner connecting pipe 25. The inner connecting pipe 25 has an outer diameter equal to the inner diameter of the inner hose 5, and the outer connecting pipe 26 has an outer diameter equal to the inner diameter of the outer hose 4. The outer walls of the inner connecting pipe 25 and the outer connecting pipe 26 are provided with a plurality of annular protruding fitting ribs 38, so that the inner connecting pipe 25 and the outer connecting pipe 26 can be respectively inserted into and tightly connected with the inner hose 5 and the outer hose 4, thereby the inner hose 5 and the outer hose 4 are connected into one piece. In addition, a non-elastic fastening ring 6 is provided on the outer side of an end of the outer hose 4 and fitted around the outer hose 4 to prevent the outer hose 4 from expanding, so that the outer hose 4 is fastened to the water outlet joint 8. The water outlet part 20 is in the shape of a groove, one side of which is connected with the inner connecting pipe 25 and the outer connecting pipe 26, and on the other side thereof an installation groove 34 is provided. The water outlet part 20 is provided with through holes along the inner connecting pipe 25 and the outer connecting pipe 26, so that the water outlet joint 8 is formed with cold water through hole 22 and hot water through hole 23 to allow cold water and hot water to pass through the water outlet joint 8. Specifically, a through hole with the same inner diameter as the inner connecting pipe 25 is provided in the center of the water outlet part 20, and this through hole together with the space in the inner connecting pipe 25 form the cold water through hole 22. The water outlet part 20 is provided with three arc-shaped through holes which are positioned around the cold water through hole 22 and match with the gap between the inner connecting pipe 25 and the outer connecting pipe 26. The arc-shaped through holes are formed as water outlets 39, and a partition rib 24 is formed between adjacent water outlets 39, i.e., the hot water through hole 23 is provided with partition ribs 24 at the water outlet end thereof. The water outlets 39 and the gap formed between the inner connecting pipe 25 and the outer connecting pipe 26 together form the hot water through hole 23. Therefore, the hot water in the hose body 1 can flow into the water outlet joint 8 through the gap between the inner connecting pipe 25 and the outer connecting pipe 26 and flow out through the three water outlets 39 respectively. In addition, as shown in FIG. 4, the inner diameter of the water outlet horn-shaped joint 7 is slightly larger than the outer diameter of the water outlet part 20, so that the water outlet part 20 can be radially limited to prevent the water outlet joint 8 from wobbling in the water outlet horn-shaped joint 7. Moreover, a radially extending restricting rib 35 is provided on the inner wall of the water outlet horn-shaped joint 7, which is abutted against an end face of the water outlet part 20, thereby restricting the movement of the water outlet joint 8 on one side. After the water outlet device is screwed to the water outlet horn-shaped joint 7, the water outlet device can restrict the movement of the water outlet joint 8 on the other side, thereby a connection is formed between the hose body 1 and the water outlet device.

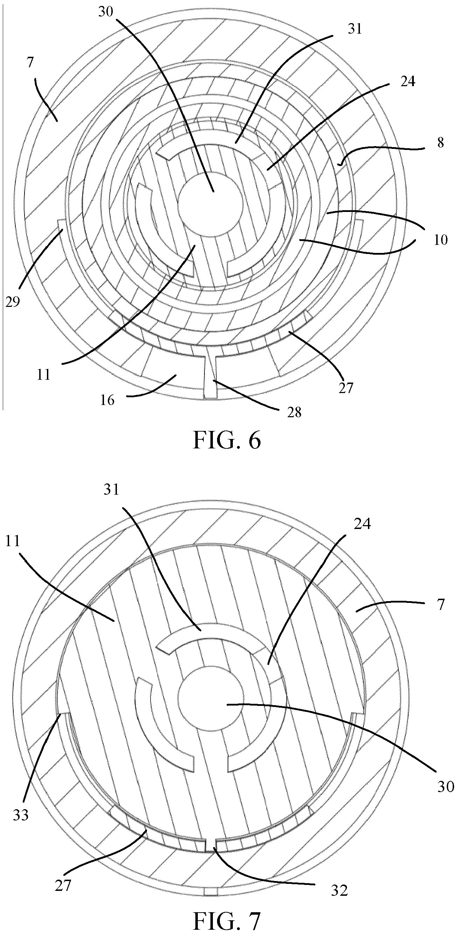

As shown in FIGs. 2 to 4, 5 and 6, the temperature adjusting mechanism includes a temperature adjusting head 11 and a temperature adjusting knob 9 which are separated pieces. The temperature adjusting head 11 is rotatably installed in the water outlet horn-shaped joint 7, and the temperature adjusting knob 9 is arranged on the outer periphery of the temperature adjusting head 11 with one end of the temperature adjusting knob 9 protruding out with respect to the water outlet horn-shaped joint 7. Specifically, a central hole 30 communicating with the cold water through hole 22 is provided at the center of the temperature adjusting head 11, so that cold water can directly pass through the temperature adjusting head 11, and the flow rate thereof is not affected by the rotation of the temperature adjusting head 11. The temperature adjusting head 11 is provided with two outer holes 31 outside the central hole 30. The two outer holes 31 penetrate through the temperature adjusting head 11 and axially match with the hot water through hole 23. The cross sections of the outer holes 31 are of arc-shaped, one of which is in a major arc shape and the other is in a minor arc shape. However, the number of the outer holes 31 is not limited to two. As a result, when the temperature adjusting head 11 rotates around its own axis, the water passing area formed by the outer holes 31 and the water outlets 39 changes accordingly. For example, as shown in FIG. 7, one partition rib 24 is on the axial projection of the outer holes 31, while the other two partition ribs 24 are not exposed (i.e., not on the axial projection of the outer holes 31). At this point, the water passing area (i.e., the difference between the area of the outer holes 31 and the cross-sectional area of one partition rib 24) is relatively large, such that the hot water flow rate is maximized. After rotating for a certain angle, the three partition ribs 24 are all on the axial projection of the outer holes 31. At this point, the water passing cross-sectional area is the difference between the area of the outer holes 31 and the total cross-sectional area of the three partition ribs 24, which is significantly smaller than the water passing area shown in FIG. 7, thus the water flow rate is relatively low. It can be seen that, by rotating the temperature adjusting head 11, the flow rate of hot water passing therethrough can be controlled without affecting the flow rate of cold water.

As shown in FIGs. 2, 4, 6, 7 and 9, in order to facilitate the rotation of the temperature adjusting head 11, a radial extension 36 is provided on the outer wall of the temperature adjusting head 11 and can abut against the inner wall of the water outlet horn-shaped joint 7 for radial positioning. The outer side of the extension 36 is connected with the temperature adjusting knob 9. Specifically, the temperature adjusting head 11 is inserted into the installation groove 34 on one side of the extension 36. A receiving groove 33 is provided on the outer side of the extension 36, and a protruding fixing rib 32 is provided in the receiving groove 33. Correspondingly, the temperature adjusting knob 9 includes an arc-shaped plate 27 and a tab 28, and the arc-shaped plate 27 is sandwiched between the water outlet part 20 of the water outlet joint 8 and the inner wall of the water outlet horn-shaped joint 7. The arc-shaped plate 27 is provided with a notch 37 for matching with the fixing rib 32, so that the fixing rib 32 can be inserted into the notch 37. The tab 28 is arranged on the outer side of the arc-shaped plate 27. In order for the tab 28 extending out, an installation hole 16 is provided in the side wall of the water outlet horn-shaped joint 7, so that the tab 28 can be extended out of the installation hole 16, which is convenient for a user to exert force and thus make the adjustment. In addition, in order to limit the rotation angle and ensure the rotation stability of the temperature adjusting knob 9, the tab 28 has the shape of a flat plate, and the installation hole 16 is configured as an elongated hole arranged along the circumferential direction of the water outlet horn-shaped joint 7. The height of the tab 28 is slightly smaller than the width of the elongated hole, so that the tab 28 cannot move along the width direction of the installation hole 16, but can only slide along the length direction of the installation hole 16. The two edges of the installation hole 16 along the length direction thereof limit the movement of the tab 28. A clearance groove 29 is provided in the inner wall of the water outlet horn-shaped joint 7, and the arc-shaped plate 27 is arranged in the clearance groove 29 which provides a space for the sliding of the arc-shaped plate 27. The two groove walls along the length direction of the clearance groove 29 limit the sliding of the arc-shaped plate 27 and also limit the rotation angle of the temperature adjusting knob 9.

In addition, as shown in FIGs. 2, 3 and 4, seals are provided between the temperature adjusting head 11 and the water outlet joint 8, and on the side of the temperature adjusting head 11 facing away from the water outlet joint 8. The seals include a first seal 10 and a second seal 12, both of which are V-RING type seal rings. The first seal 10 and the second seal 12 are respectively arranged on two sides of the extension 36, and the first seal 10 is arranged in the installation groove 34, so that the two seals can prevent water from flowing out from the lateral side of the temperature adjusting head 11.

As shown in FIGs. 1 to 3, the water inlet joint assembly 3 includes a water inlet joint 14, a water inlet horn-shaped joint 13 and a gasket 15 which are connected to one another. The water inlet joint 14 and the water outlet joint 8 are similar in structure, except that the side of the water inlet joint 14 facing away from the hose body 1 is plate-shaped instead of groove-shaped. The water inlet joint 14 can also be connected with the inner hose 5 and the outer hose 4. The water inlet horn-shaped joint 13 is sleeved outside the water inlet joint 14 and also has the shape of a horn. The water inlet horn-shaped joint 13 is provided with an internal thread 17 on the inner side of the end having a larger opening so as to connect to the water inlet device, which also forms an axial limit with the water inlet joint 14.

To sum up, after the hose structure is connected with the water inlet device and the water outlet device, when a user uses the hose structure, the user can shift the tab 28 by a finger to drive the temperature adjusting head 11 to rotate, thereby changing the flow rate of hot water flowing out of the hose structure, realizing the change of the outlet water temperature with the flow rate of cold water unchanged, and achieving the purpose of adjusting the temperature. The overall structure is simple and reliable, and the user experience is greatly improved.

In combination with the above examples, according to the hose structure with adjustable outlet water temperature of the example of the application, both cold and hot water channels discharge water, and a temperature adjusting mechanism for adjusting the flow rate of cold and hot water is arranged to realize the adjustment of the flow rate of hot water, thereby adjusting the temperature of the outlet water by controlling the flow rate of hot water and thus achieving the purpose of temperature adjustment.

In the description of the application, it should be noted that the orientation or positional relationship indicated by the terms "upper", "lower", "one side", "the other side", "one end", "the other end", "side", "opposite", "four corners", "periphery" and "square-shaped structure" and the like are determined based on the orientation or positional relationship shown in the drawings, which are only for convenience of describing the application and simplifying the description, and do not indicate or imply that the indicated structure has a specific orientation, or is constructed and operated in a specific orientation, and therefore cannot be understood as a limitation to the application.

In the description of the example of the application, the terms "connected", "directly connected", "indirectly connected", "fixedly connected", "install", and "assemble" shall be explained in a broad sense, for example, they may refer to a fixed connection, detachable connection or integrated connection, unless otherwise clearly specified and defined. The terms "install", "connect" and "fixedly connect" can refer to being directly connected, or being indirectly connected through an intermediate medium, or being internally communicated between two elements. For those of ordinary skill in the art, the specific meaning of the above terms in the application can be understood according to specific situations.

Although the examples of the application are described above, they are only examples for ease of understanding the application and are not intended to limit the application. One skilled in the art may make any modification and change in the forms and details of implementation which come within the patent protection scope of this application as defined by the appended claims.

## Claims

1. A hose structure with adjustable water outlet temperature, comprising a hose body (1) and a water outlet joint assembly (2) arranged at one end of the hose body (1) and configured for connecting a water outlet device, wherein the hose body (1) is provided with through first and second channels (18, 19), wherein the first channel (18) is configured for receiving cold water, the second channel (19) is annular and surrounds the first channel (18) and is configured for receiving hot water,
wherein the hose body (1) comprises an outer hose (4) and an inner hose (5) sleeved in the outer hose (4), wherein the first channel (18) is formed in the inner hose (5), and a gap between the outer hose (4) and the inner hose (5) forms the second channel (19),
wherein the water outlet joint assembly (2) comprises a water outlet joint (8) and a water outlet horn-shaped joint (7) which are connected to each other, wherein the water outlet joint (8) is connected with the inner hose (5) and the outer hose (4), and the water outlet joint (8) is provided with a cold water through hole (22) and a hot water through hole (23) which are respectively matched with the first channel (18) and the second channel (19) to allow cold water and hot water to pass through, wherein the hot water through hole (23) is provided with partition ribs (24) at a water outlet end thereof to form a plurality of spaced water outlets (39), wherein the water outlet horn-shaped joint (7) is sleeved outside the water outlet joint (8), **characterized in that** a temperature adjusting mechanism is provided in the water outlet joint assembly (2) and configured for adjusting the flow rate of hot water flowing out of the hose structure,
wherein the temperature adjusting mechanism is arranged in the water outlet horn-shaped joint (7) and positioned at the side of the water outlet joint (8) facing away from the hose body (1).

2. The hose structure with adjustable water outlet temperature according to claim 1, **characterized in that** the water outlet joint (8) comprises a water inlet part and a water outlet part (20) which are connected to each other, wherein the water inlet part is provided with an inner connecting pipe (25) and an outer connecting pipe (26) sleeved outside the inner connecting pipe (25), wherein the water outlet part (20) is provided with an installation groove (34) on the side thereof facing away from the water inlet part, and wherein one end of the temperature adjusting mechanism is inserted into the installation groove (34).

3. The hose structure with adjustable outlet water temperature according to claim 1, **characterized in that** the temperature adjusting mechanism comprises a temperature adjusting head (11) and a temperature adjusting knob (9), wherein the temperature adjusting head (11) is rotatably installed in the water outlet horn-shaped joint (7), wherein the temperature adjusting head (11) is provided with a central hole (30) communicated with the cold water through hole (22), and one or more outer holes (31) with arc-shaped cross sections, wherein the outer holes (31) are arranged outside the central hole (30) and match with the hot water through hole (23), and wherein the temperature adjusting knob (9) is arranged on an outer periphery of the temperature adjusting head (11) and one end of the temperature adjusting knob (9) extends out of the water outlet horn-shaped joint (7).

4. The hose structure with adjustable water outlet temperature according to claim 3, **characterized in that** the temperature adjusting knob (9) comprises an arc-shaped plate (27) and a tab (28), wherein the arc-shaped plate (27) is sandwiched between the water outlet joint (8) and the water outlet horn-shaped joint (7), and wherein the tab (28) extends out of the water outlet horn-shaped joint (7).

5. The hose structure with adjustable water outlet temperature according to claim 4, **characterized in that** an installation hole (16) is provided in a side wall of the water outlet horn-shaped joint (7), wherein the tab (28) extends out of the water outlet horn-shaped joint (7) through the installation hole (16), wherein the installation hole (16) is configured as an elongated hole arranged along a circumferential direction of the water outlet horn-shaped joint (7), and the tab (28) is slidable along a length direction of the installation hole (16).

6. The hose structure with adjustable outlet water temperature according to claim 3, **characterized in that** seals (10, 12) are provided between the temperature adjusting head (11) and the water outlet joint (8) and on the side of the temperature adjusting head (11) facing away from the water outlet joint (8).

7. The hose structure with adjustable water outlet temperature according to any one of claims 1 to 6, **characterized in that** the hose body (1) is provided with a water inlet joint assembly (3) at the other end, wherein the water inlet joint assembly (3) comprises a water inlet joint (14) and a water inlet horn-shaped joint (13) which are connected to each other, wherein the water inlet joint (14) is connected with the inner hose (5) and the outer hose (4), and the water inlet horn-shaped joint (13) is sleeved outside the water inlet joint (14).

8. The hose structure with adjustable outlet water temperature according to any one of claims 1 to 6, **characterized in that** fastening rings (6) are sleeved at both ends of the outer hose (4).

## Patentansprüche

1. Eine Schlauchstruktur mit einstellbarer Wasserauslasstemperatur, beinhaltend einen Schlauchkörper (1) und eine Wasserauslassanschlussanordnung (2), die an einem Ende des Schlauchkörpers (1) angeordnet ist und zum Anschließen einer Wasserauslassvorrichtung konfiguriert ist, wobei der Schlauchkörper (1) mit einem ersten und einem zweiten durchgehenden Durchlass (18, 19) versehen ist, wobei der erste Durchlass (18) zum Aufnehmen von Kaltwasser konfiguriert ist und der zweite Durchlass (19) ringförmig ist und den ersten Durchlass (18) umgibt und zum Aufnehmen von Warmwasser konfiguriert ist,
wobei der Schlauchkörper (1) einen äußeren Schlauch (4) und einen in den äußeren Schlauch (4) eingeschobenen inneren Schlauch (5) beinhaltet, wobei der erste Durchlass (18) in dem inneren Schlauch (5) gebildet ist und ein Zwischenraum zwischen dem äußeren Schlauch (4) und dem inneren Schlauch (5) den zweiten Durchlass (19) bildet,
wobei
die Wasserauslassanschlussanordnung (2) einen Wasserauslassanschluss (8) und einen hornförmigen Wasserauslassanschluss (7), die miteinander verbunden sind, beinhaltet, wobei der Wasserauslassanschluss (8) mit dem inneren Schlauch (5) und dem äußeren Schlauch (4) verbunden ist und der Wasserauslassanschluss (8) mit einem Kaltwasserdurchgangsloch (22) und einem Warmwasserdurchgangsloch (23) versehen ist, die mit dem ersten Durchlass (18) bzw. dem zweiten Durchlass (19) zusammengepasst sind, um Kaltwasser und Warmwasser dadurch hindurch gelangen zu lassen, wobei das Warmwasserdurchgangsloch (23) mit Trennrippen (24) an einem Wasserauslassende davon versehen ist, um eine Vielzahl von beabstandeten Wasserauslässen (39) zu bilden, wobei der hornförmige Wasserauslassanschluss (7) außen auf den Wasserauslassanschluss (8) aufgeschoben ist,
**dadurch gekennzeichnet, dass** ein Temperatureinstellmechanismus in der Wasserauslassanschlussanordnung (2) bereitgestellt ist und zum Einstellen des Durchsatzes von aus der Schlauchstruktur fließendem Warmwasser konfiguriert ist, wobei der Temperatureinstellmechanismus in dem hornförmigen Wasserauslassanschluss (7) angeordnet ist und auf der von dem Schlauchkörper (1) weg weisenden Seite des Wasserauslassanschlusses (8) positioniert ist.

2. Schlauchstruktur mit einstellbarer Wasserauslasstemperatur gemäß Anspruch 1,
**dadurch gekennzeichnet, dass** der Wasserauslassanschluss (8) einen Wassereinlassteil und einen Wasserauslassteil (20), die miteinander verbunden sind, beinhaltet, wobei der Wassereinlassteil mit einem inneren Verbindungsrohr (25) und einem außen auf das innere Verbindungsrohr (25) aufgeschobenen äußeren Verbindungsrohr (26) versehen ist, wobei der Wasserauslassteil (20) mit einer Installationsnut (34) auf der von dem Wassereinlassteil weg weisenden Seite davon versehen ist und wobei ein Ende des Temperatureinstellmechanismus in die Installationsnut (34) eingesteckt ist.

3. Schlauchstruktur mit einstellbarer Auslasswassertemperatur gemäß Anspruch 1, **dadurch gekennzeichnet, dass** der Temperatureinstellmechanismus einen Temperatureinstellkopf (11) und einen Temperatureinstellknopf (9) beinhaltet, wobei der Temperatureinstellkopf (11) drehbar in dem hornförmigen Wasserauslassanschluss (7) installiert ist, wobei der Temperatureinstellkopf (11) mit einem mit dem Kaltwasserdurchgangsloch (22) in Verbindung stehenden mittigen Loch (30) und einem oder mehreren äußeren Löchern (31) mit bogenförmigen Querschnitten versehen ist, wobei die äußeren Löcher (31) außerhalb des mittigen Lochs (30) angeordnet sind und mit dem Warmwasserdurchgangsloch (23) zusammenpassen und wobei der Temperatureinstellknopf (9) auf einem Außenrand des Temperatureinstellkopfs (11) angeordnet ist und sich ein Ende des Temperatureinstellknopfs (9) aus dem hornförmigen Wasserauslassanschluss (7) heraus erstreckt.

4. Schlauchstruktur mit einstellbarer Wasserauslasstemperatur gemäß Anspruch 3, **dadurch gekennzeichnet, dass** der Temperatureinstellknopf (9) eine bogenförmige Platte (27) und eine Nase (28) beinhaltet, wobei die bogenförmige Platte (27) sandwichartig zwischen dem Wasserauslassanschluss (8) und dem hornförmigen Wasserauslassanschluss (7) angeordnet ist und wobei sich die Nase (28) aus dem hornförmigen Wasserauslassanschluss (7) heraus erstreckt.

5. Schlauchstruktur mit einstellbarer Wasserauslasstemperatur gemäß Anspruch 4, **dadurch gekennzeichnet, dass** ein Installationsloch (16) in einer Seitenwand des hornförmigen Wasserauslassanschlusses (7) bereitgestellt ist, wobei sich die Nase (28) durch das Installationsloch (16) aus dem hornförmigen Wasserauslassanschluss (7) heraus erstreckt, wobei das Installationsloch (16) als Langloch konfiguriert ist, das entlang einer Umfangsrichtung des hornförmigen Wasserauslassanschlusses (7) angeordnet ist, und die Nase (28) entlang einer Längenrichtung des Installationslochs (16) verschiebbar ist.

6. Schlauchstruktur mit einstellbarer Auslasswassertemperatur gemäß Anspruch 3, **dadurch gekennzeichnet, dass** Dichtungen (10, 12) zwischen dem Temperatureinstellkopf (11) und dem Wasserauslassanschluss (8) und auf der von dem Wasserauslassanschluss (8) weg weisenden Seite des Temperatureinstellkopfs (11) bereitgestellt sind.

7. Schlauchstruktur mit einstellbarer Wasserauslasstemperatur gemäß einem der Ansprüche 1 bis 6, **dadurch gekennzeichnet, dass** der Schlauchkörper (1) mit einer Wassereinlassanschlussanordnung (3) an dem anderen Ende versehen ist, wobei die Wassereinlassanschlussanordnung (3) einen Wassereinlassanschluss (14) und einen hornförmigen Wassereinlassanschluss (13), die miteinander verbunden sind, beinhaltet, wobei der Wassereinlassanschluss (14) mit dem inneren Schlauch (5) und dem äußeren Schlauch (4) verbunden ist und der hornförmige Wassereinlassanschluss (13) außen auf den Wassereinlassanschluss (14) aufgeschoben ist.

8. Schlauchstruktur mit einstellbarer Auslasswassertemperatur gemäß einem der Ansprüche 1 bis 6, **dadurch gekennzeichnet, dass** Fixierungsringe (6) an beiden Enden des äußeren Schlauchs (4) aufgeschoben sind.

## Revendications

1. Une structure de tuyau à température de sortie d'eau réglable, comprenant un corps de tuyau (1) et un ensemble formant joint de sortie d'eau (2) agencé à une extrémité du corps de tuyau (1) et conçu pour raccorder un dispositif de sortie d'eau, le corps de tuyau (1) étant pourvu de premier et deuxième canaux traversants (18, 19), le premier canal (18) étant conçu pour recevoir de l'eau froide, le deuxième canal (19) étant annulaire et entourant le premier canal (18) et étant conçu pour recevoir de l'eau chaude,
le corps de tuyau (1) comprenant un tuyau externe (4) et un tuyau interne (5) emmanché dans le tuyau externe (4), le premier canal (18) étant formé dans le tuyau interne (5), et un espace entre le tuyau externe (4) et le tuyau interne (5) formant le deuxième canal (19),
dans laquelle
l'ensemble formant joint de sortie d'eau (2) comprend un joint de sortie d'eau (8) et un joint en cornet de sortie d'eau (7) qui sont raccordés l'un à l'autre, le joint de sortie d'eau (8) étant raccordé au tuyau interne (5) et au tuyau externe (4), et le joint de sortie d'eau (8) étant pourvu d'un trou traversant à eau froide (22) et d'un trou traversant à eau chaude (23) qui sont respectivement mis en correspondance avec le premier canal (18) et le deuxième canal (19) afin de permettre à de l'eau froide et à de l'eau chaude de passer à travers, le trou traversant à eau chaude (23) étant pourvu de nervures de séparation (24) à une extrémité de sortie d'eau de celui-ci afin de former une pluralité de sorties d'eau espacées (39), le joint en cornet de sortie d'eau (7) étant emmanché à l'extérieur du joint de sortie d'eau (8),
**caractérisée en ce qu'**un mécanisme de réglage de température est disposé dans l'ensemble formant joint de sortie d'eau (2) et conçu pour régler le débit d'eau chaude s'écoulant hors de la structure de tuyau,
le mécanisme de réglage de température étant agencé dans le joint en cornet de sortie d'eau (7) et positionné au niveau du côté du joint de sortie d'eau (8) opposé au corps de tuyau (1).

2. La structure de tuyau à température de sortie d'eau réglable selon la revendication 1, **caractérisée en ce que** le joint de sortie d'eau (8) comprend une partie d'entrée d'eau et une partie de sortie d'eau (20) qui sont raccordées l'une à l'autre, la partie d'entrée d'eau étant pourvue d'un tube de raccordement interne (25) et d'un tube de raccordement externe (26) emmanché à l'extérieur du tube de raccordement interne (25), la partie de sortie d'eau (20) étant pourvue d'une rainure d'installation (34) sur le côté de celle-ci opposé à la partie d'entrée d'eau, et une extrémité du mécanisme de réglage de température étant insérée dans la rainure d'installation (34).

3. La structure de tuyau à température d'eau de sortie réglable selon la revendication 1, **caractérisée en ce que** le mécanisme de réglage de température comprend une tête de réglage de température (11) et un bouton de réglage de température (9), la tête de réglage de température (11) étant installée de manière rotative dans le joint en cornet de sortie d'eau (7), la tête de réglage de température (11) étant pourvue d'un trou central (30) en communication avec le trou traversant à eau froide (22), et d'un ou de plusieurs trous externes (31) présentant des sections transversales en arc, les trous externes (31) étant agencés à l'extérieur du trou central (30) et étant en correspondance avec le trou traversant à eau chaude (23), et le bouton de réglage de température (9) étant agencé sur une périphérie externe de la tête de réglage de température (11) et une extrémité du bouton de réglage de température (9) s'étendant hors du joint en cornet de sortie d'eau (7).

4. La structure de tuyau à température de sortie d'eau réglable selon la revendication 3, **caractérisée en ce que** le bouton de réglage de température (9) comprend une plaque en arc (27) et une languette (28), la plaque en arc (27) étant prise en sandwich entre le joint de sortie d'eau (8) et le joint en cornet de sortie d'eau (7), et la languette (28) s'étendant hors du joint en cornet de sortie d'eau (7).

5. La structure de tuyau à température de sortie d'eau réglable selon la revendication 4, **caractérisée en ce qu'**un trou d'installation (16) est disposé dans une paroi latérale du joint en cornet de sortie d'eau (7), la languette (28) s'étendant hors du joint en cornet de sortie d'eau (7) à travers le trou d'installation (16), le trou d'installation (16) étant conçu comme un trou allongé agencé le long d'une direction circonférentielle du joint en cornet de sortie d'eau (7), et la languette (28) pouvant coulisser le long d'une direction en longueur du trou d'installation (16).

6. La structure de tuyau à température d'eau de sortie réglable selon la revendication 3, **caractérisée en ce que** des joints d'étanchéité (10, 12) sont disposés entre la tête de réglage de température (11) et le joint de sortie d'eau (8) et sur le côté de la tête de réglage de température (11) opposé au joint de sortie d'eau (8).

7. La structure de tuyau à température de sortie d'eau réglable selon l'une quelconque des revendications 1 à 6, **caractérisée en ce que** le corps de tuyau (1) est pourvu d'un ensemble formant joint d'entrée d'eau (3) à l'autre extrémité, l'ensemble formant joint d'entrée d'eau (3) comprenant un joint d'entrée d'eau (14) et un joint en cornet d'entrée d'eau (13) qui sont raccordés l'un à l'autre, le joint d'entrée d'eau (14) étant raccordé au tuyau interne (5) et au tuyau externe (4), et le joint en cornet d'entrée d'eau (13) étant emmanché à l'extérieur du joint d'entrée d'eau (14).

8. La structure de tuyau à température d'eau de sortie réglable selon l'une quelconque des revendications 1 à 6, **caractérisée en ce que** des anneaux de fixation (6) sont emmanchés aux deux extrémités du tuyau externe (4).
